# EUROPÄISCHE PATENTANMELDUNG

(11) **EP 4 527 570 A1**
(43) Veröffentlichungstag der Anmeldung: **26.03.2025**
(21) Anmeldenummer: 24193043.7
(22) Anmeldetag: 06.08.2024
(51) Int. Cl.: B25J 15/06, B25J 15/00, B65B 5/08, B65B 21/14, B65G 47/91

(54) **GREIFERKOPF MIT MEHREREN SAUGGREIFERN, HEBEANORDNUNG MIT EINEM SOLCHEN GREIFERKOPF UND VERFAHREN ZUM ERFASSEN VON VERPACKUNGSEINHEITEN**

(30) Priorität: 20.09.2023 DE 202023105487 U
(71) Anmelder: Krones Aktiengesellschaft, 93073 Neutraubling (DE)
(72) Erfinder: BEINHOFER, Manfred, 93073 Neutraubling (DE); KIRSCHNER, Peter, 93073 Neutraubling (DE); MURNAUER, Dominik, 93073 Neutraubling (DE); PERL, Kurt, 93073 Neutraubling (DE); MARTL, Andreas, 93073 Neutraubling (DE); REICHERT, Christian, 93073 Neutraubling (DE)
(74) Vertreter: Benninger Patentanwaltskanzlei

(57) **Zusammenfassung**

Es ist ein Greiferkopf (12) mit mehreren innerhalb eines Saugareals (30) angeordneten und mit Unterdruck beaufschlagbaren Sauggreifern (28) offenbart. Der Greiferkopf (12) ist zum Erfassen von Verpackungseinheiten (14) durch Anlegen eines Unterdrucks an den Sauggreifern (28) vorgesehen, indem diese in oberseitig auf die Verpackungseinheit (14) aufgesetzter Position mit einer Oberseite (16) der Verpackungseinheit (14) zusammenwirken und die Verpackungseinheit (14) aufnehmen. Der Greiferkopf (12) ist dabei mit mindestens zwei Zentrierbacken (20) ausgestattet, die an zwei gegenüberliegenden Seiten des Saugareals (30) mit den darin befindlichen Sauggreifern (28) angeordnet und relativ zum Saugareal (30) in paralleler Richtung zu Längsmittelachsen der Sauggreifer (28) beweglich sind.

## Beschreibung

Die vorliegende Erfindung betrifft einen Greiferkopf mit mehreren Sauggreifern zum Erfassen von Verpackungseinheiten. Zudem betrifft die Erfindung eine Hebeanordnung, bestehend aus einem Greiferkopf und mindestens einer mit Unterdruck zu erfassenden Verpackungseinheit. Außerdem betrifft die Erfindung ein Verfahren zum Erfassen von Verpackungseinheiten unter Verwendung eines derartigen Greiferkopfes.

Will ein Anwender einzelne gleichartige Artikel gruppieren und zu Verpackungseinheiten zusammenfassen, so stehen ihm hierfür unterschiedliche Möglichkeiten zur Verfügung. So werden bspw. Getränkebehälter oftmals mittels Schrumpffolien zu Gebinden von vier, sechs oder mehr Getränkebehältern zusammengefasst und verpackt. Eine weitere Verpackungsvariante besteht darin, eine definierte Anzahl von Artikeln, die bspw. durch Getränkebehälter oder Flaschen gebildet sein können, in eine hierfür vorbereitete Kartonumverpackung einzufügen, so dass die Artikel oder Behälter dort nebeneinanderstehend aufgenommen sind.

Die Herstellung von solchen Gebinden oder Verpackungseinheiten ist in vielen Fällen unumgänglich, da sie die häufigste Variante von Verkaufseinheiten für Getränkebehälter (wie bspw. Flaschen aus PET-Kunststoff) darstellen. Die Gebinde werden für den Transport teilweise nochmals zusammengefasst und/oder in Lagen zusammengestellt und palettiert. Die erwähnten Kartonumverpackungen eignen sich insbesondere für Getränkeflaschen aus Mineralglas, da hierdurch die Glasflaschen einen zusätzlichen mechanischen Schutz erhalten.

Zur Handhabung solcher Kartonumverpackungen, die auch als Sekundärverpackungen zur Aufnahme der als Primärverpackungen zu betrachtenden Getränkebehälter bezeichnet werden können, lassen sich entsprechend ausgestattete Handhabungseinrichtungen einsetzen. Ein Beispiel einer solchen Handhabungseinrichtung ist ein beweglich aufgehängter Greiferkopf mit gegeneinander zustellbaren Greifbacken oder Greifpaddeln, zwischen denen die einzelnen Umverpackungen oder Sekundärverpackungen geklemmt werden können, um angehoben, gedreht und in eine gewünschte Position und Ausrichtung gebracht zu werden. Ein solcher Handhabungsvorgang kann etwa dafür dienen, die Umverpackungen oder Sekundärverpackungen in eine bereitstehende Tertiärverpackung einzusetzen oder um sie auf einem Ablageplatz abzustellen, der einer Palettierung dienen kann.

Neben solchen Greiferköpfen mit gegeneinander zustellbaren Greifbacken oder Greifpaddeln können auch Greiferköpfe eingesetzt werden, die unterdruckgesteuert arbeiten, um solchermaßen die zu handhabenden Umverpackungen oder Sekundärverpackungen mittels Sauggreifern zu erfassen und anheben. Durch Abschalten des Unterdrucks an den Sauggreifern kann die zuvor mit dem Greiferkopf erfasste Umverpackung an einem gewünschten Zielort abgesetzt werden, ggf. unter vorheriger Drehung, Verschiebung oder durch kombinierte Bewegungsmuster.

Da manche der mit Primärverpackungen wie Getränkebehältern bestückten Umverpackungen oder Sekundärverpackungen nicht unter allen auftretenden Bedingungen ausreichend formstabil sind, etwa wegen eines verwendeten biegeweichen Verpackungsmaterials aus relativ dünnem Kartonmaterial, kann es sich als notwendig erweisen, zusätzliche Stabilisierungsmittel am Greiferkopf vorzusehen, gebildet bspw. durch abstützende Halte- oder Zentrierkäfige, die beim Aufsetzen des Greiferkopfes auf eine hierfür geeignete flächige Oberseite der betreffenden Umverpackung deren vertikale Seitenwände stützen und stabilisieren. Eine solche Zusatzausstattung am Greiferkopf kann zwar eine mangelnde Formstabilität einer sich verformenden Umverpackung oder Sekundärverpackung ausgleichen, ermöglicht aber nicht die Handhabung unterschiedlicher Formate oder Größen der Umverpackungen, da die Positionen derartiger Halte- oder Zentrierkäfige auf ein bestimmtes Verpackungsformat abzustimmen sind.

Das vorrangige Ziel der vorliegenden Erfindung kann darin gesehen werden, eine verbesserte Handhabung und Erfassung von Verpackungseinheiten zu ermöglichen, insbesondere eine sichere Handhabung von Umverpackungen oder Sekundärverpackungen mittels unterdruckbetriebener Sauggreifer unter gleichzeitiger mechanischer Stabilisierung der zu erfassenden Umverpackungen.

Dieses Ziel wird mit einem Greiferkopf sowie mit einer Hebeanordnung erreicht, welche die Merkmale der jeweiligen unabhängigen Ansprüche umfassen. Weitere vorteilhafte Ausgestaltungen werden durch die jeweiligen abhängigen Ansprüche beschrieben.

Zur Erreichung des oben genannten Ziels schlägt die Erfindung einen Greiferkopf mit mehreren Sauggreifern vor, die insbesondere in einem Saugareal innerhalb des Greiferkopfes in regelmäßiger Anordnung positioniert sind, so dass unterseitig an den Sauggreifern befindliche Objekte erfasst und bewegt werden können. Der Greiferkopf dient dem Erfassen von Verpackungseinheiten durch Anlegen eines Unterdrucks an den Sauggreifern. Der an den Sauggreifern anliegende Unterdruck muss mindestens so stark sein, dass die Sauggreifer gemeinsam in die Lage versetzt sind, in einer oberseitig auf die jeweilige Verpackungseinheit aufgesetzten Position mit dieser Oberseite zusammenzuwirken und solchermaßen die Verpackungseinheit aufnehmen und von einer Unterlage abheben zu können.

Der Greiferkopf selbst kann an einer geeigneten Aufhängung angeordnet sein, die seine Beweglichkeit im Raum gemäß der von ihm zu erfüllenden Handhabungsaufgaben ermöglicht. So kann der Greiferkopf bspw. an einer zweiachsig oder dreiachsig verfahrbaren Portalaufhängung gehaltert sein. Alternativ hierzu kann sich auch ein Parallelkinematik-Roboter als Aufhängung für den Greiferkopf eignen, wahlweise auch eine Aufhängung an einem Mehrachs-Roboterarm. Alle diese Aufhängungen können die gewünschte Verfahrbarkeit und Positionierbarkeit des Greiferkopfes ermöglichen, um ihm das Erfassen der Verpackungseinheiten durch Aktivieren von unterdruckgesteuerten Sauggreifern und das Umpositionieren der Verpackungseinheiten zu ermöglichen.

Neben dieser Hauptfunktionalität des Greiferkopfes, die auf das Erfassen und Aufnehmen von Objekten wie insbesondere von Verpackungseinheiten gerichtet ist, verfügt der Greiferkopf über Einrichtungen zur mechanischen Stabilisierung und insbesondere zur Aufrechterhaltung einer Formstabilität der zu erfassenden Verpackungseinheiten. Zu diesem Zweck befinden sich an zwei gegenüberliegenden Seiten des Greiferkopfes mindestens zwei bewegliche Zentrierbacken, die relativ zum Saugareal in paralleler Richtung zu Längsmittelachsen der Sauggreifer beweglich sind. Damit ist insbesondere eine Höhenverstellbarkeit und Beweglichkeit der Zentrierbacken in vertikaler Richtung gemeint, da die Sauggreifer in aller Regel die Verpackungseinheiten von oben erfassen.

Zwischen diesen Zentrierbacken befindet sich das jeweils mittels der Sauggreifer erfasste Objekt, insbesondere die zu erfassende Verpackungseinheit, die während der Handhabung durch den Greiferkopf aufgrund der an zwei Seitenflächen anliegenden Zentrierbacken in mechanischer Hinsicht stabilisiert wird. Einerseits sollen die Zentrierbacken verhindern, dass die Verpackungseinheiten durch das oberseitige Erfassen mit den Sauggreifern und durch das Anheben ihre Formstabilität einbüßen, etwa weil die in der Verpackungseinheit befindlichen Artikel das dünnwandige Verpackungsmaterial der Verpackungseinheit verformen, sobald diese angehoben wird. Andererseits können die Zentrierbacken eine schon leicht verformte Verpackungseinheit oder z.B. einen nicht vollständig in Form gebrachten Verpackungskarton stabilisieren und abstützen, wenn er angehoben und umpositioniert wird. Ein solcher Verpackungskarton kann bspw. eine noch nicht ganz verschlossene Faltschachtel sein.

Da ein einzelner Sauggreifer hinsichtlich der damit realisierbaren Saugkraft bei einer Unterdruckbeaufschlagung normalerweise nicht ausreicht, um eine Kartonumverpackung mit mehreren darin befindlichen Flüssigkeitsbehältern anzuheben, verfügt der erfindungsgemäße Greiferkopf über ein Saugareal mit mehreren darin montierten Sauggreifern, die sinnvollerweise jeweils auf gleicher Höhe angeordnet sind, so dass eine flächige Oberseite einer Verpackungseinheit oder Kartonumverpackung mittels der mehreren im Saugareal angeordneten Sauggreifer erfasst und angehoben werden kann.

Sofern unregelmäßig geformte Verpackungseinheiten mit nicht glatter oder mit strukturierter Oberseite erfasst und angehoben werden sollen, kann es unter Umständen auch sinnvoll sein, mehrere Gruppen von Sauggreifern mit unterschiedlich positionierten unteren Saugglocken im Saugareal vorzusehen, so dass bspw. einzelne Sauggreifer auf tieferem Niveau ansetzen können als benachbarte Sauggreifer. Zudem kann es in einem solchen Fall sinnvoll sein, die unterschiedlichen Gruppen von Sauggreifern bedarfsweise unterschiedlich anzusteuern und bspw. zu unterschiedlichen Zeitpunkten mit Unterdruck zu beaufschlagen.

Für den Fall, dass die Sauggreifer im Saugareal allesamt auf gleicher Höhe positioniert und gleichartig aufgebaut sind, können sie synchron angesteuert und gleichzeitig mit dem jeweils benötigten Unterdruck beaufschlagt werden, um den Kontakt mit der Oberseite der zu erfassenden Verpackungseinheit herzustellen und um die Oberseite fest anzusaugen und die gesamte Verpackungseinheit mit dem Greiferkopf anheben und an einen gewünschten Zielort verbringen zu können.

Wenn im vorliegenden Zusammenhang meist von Verpackungseinheiten gesprochen wird, so können damit insbesondere Kartonumverpackungen oder andere Sekundärverpackungen aus flächigem Verpackungsmaterial gemeint sein, die der Aufnahme gruppierter Artikel wie bspw. Getränkebehälter, Flaschen, Getränkedosen o. dgl. dienen können. Normalerweise haben diese Verpackungseinheiten oder Kartonumverpackungen eine glattflächige und ebene Oberseite zumindest in denjenigen Bereichen, in denen die Sauggreifer angesetzt und anschließend mit Unterdruck beaufschlagt werden, da ansonsten kein luftdichter Kontakt zwischen den Wirkflächen der Sauggreifer und der Oberseite der betreffenden Verpackungseinheit zu gewährleisten wäre.

Neben solchen Sekundärverpackungen in Form von Kartonumverpackungen soll der hier verwendete Begriff der Verpackungseinheit generell auch andere Gebindevarianten mit umfassen, bspw. auch Klebegebinde, bei denen mehrere Artikel an ihren Mantelseiten durch Klebestellen miteinander verbunden sind. Innerhalb solcher Klebegebinde werden oftmals gruppierte und in Rechteckanordnung oder in Kugelpackung gebrachte Getränkebehälter haftend aneinandergefügt und miteinander verbunden, was durch Anbringen von Klebepunkten oder eines linienartigen Haftmittelauftrags an die Behältermantelflächen sowie durch anschließendes Aneinanderfügen der Behälter in einer gewünschten Anordnung erfolgen kann.

Sofern die Oberseite eines solchen Klebegebindes mittels des erfindungsgemäßen Greiferkopfes erfasst werden kann, bspw. unter Verwendung eines auf die Oberseite des Klebegebindes aufgebrachten flächigen Verpackungszuschnittes aus Karton- oder Kunststoffmaterial, soll ein solches Klebegebinde ebenfalls unter den hier verwendeten Begriff der mit dem Greiferkopf interagierenden Verpackungseinheit fallen.

Die am Greiferkopf angeordneten Zentrierbacken können unterschiedliche Gestaltungen aufweisen und bspw. aus flachen Abschnitten bestehen, die sich seitlich an die vertikalen Seitenflächen der zu erfassenden Verpackungseinheit oder Umverpackung anlegen. Die Beweglichkeit der Zentrierbacken vermeidet es, dass sie in unerwünschter Weise mit der zu erfassenden Verpackungseinheit in Kontakt kommen oder kollidieren, denn sie sollen im Wesentlichen deren Gestalt und äußere Kontur stützen und vermeiden, dass sich die Umverpackung durch das Anheben oder während eines Manipulationsvorganges verformt und ihre äußere Gestalt über ein normales Maß hinaus verändert.

Eine Variante des erfindungsgemäßen Greiferkopfes kann vorsehen, dass die gegenüberliegend angeordneten Zentrierbacken an einer vom Saugareal und von ihrer jeweiligen Aufhängung entfernten unteren Seite in einer vom Greiferkopf wegweisenden Richtung angewinkelt sind. Damit kann insbesondere gemeint sein, dass die gegenüberliegend angeordneten Zentrierbacken mit ihren unteren Seiten voneinander wegweisen, wodurch sich ein Zwischenraum zwischen den Zentrierbackenblechen in Richtung zu deren unterer Seite vergrößert.

Da insbesondere solche Verpackungseinheiten, in denen sich Getränkebehälter oder Getränkeflaschen befinden, nach oben hin verjüngt sein können, ist die vorgeschlagene Formgebung der Zentrierbacken besonders günstig, da diese eine Kollision mit oberen verjüngten Abschnitten der Verpackungseinheit weitgehend verhindert, während in den breiteren unteren Bereichen eine flächige Anlage der Zentrierbacken an den Seitenwänden der Verpackungseinheit durchaus gewünscht ist, um deren äußere Gestalt abzustützen und zu stabilisieren.

Beim Aufsetzen des Greiferkopfes von oben auf eine zu erfassende Verpackungseinheit vermeiden die erwähnten Formgebungen der Zentrierbacken an ihren unteren Seitenkanten eine Kollision mit der Oberseite der Verpackungseinheit. Vielmehr gleiten die Zentrierbacken kollisionsfrei an den vertikalen Seitenflächen der Verpackungseinheit oder Umverpackung nach unten, bis die Sauggreifer des Saugareals die horizontale Oberseite der Verpackungseinheit erreicht haben und der Unterdruck angelegt werden kann.

Da zudem die Oberflächen der Zentrierbacken gemäß einer bevorzugten Ausführungsvariante in ihren oberen Bereichen parallel zueinander ausgerichtet sind und ein konstanter Abstand zwischen ihnen ausgebildet ist, können sie beidseitig die Verpackungseinheit kontaktieren, dort flächig anliegen und somit die äußere Gestalt der Verpackungseinheit abstützen, wenn diese mitsamt ihrem Inhalt angehoben wird. Da eine Anzahl von bspw. sechs oder acht gefüllten Getränkeflaschen ein nicht unerhebliches Gewicht bedeutet, das bei einer dünnwandigen Kartonumverpackung zu deren Verformung führen kann, helfen die Zentrierbacken solche unerwünschten Verformungen zu vermeiden, wenn die Verpackungseinheit angehoben wird.

Da bei dem erfindungsgemäßen Greiferkopf die Zentrierbacken miteinander gekoppelt und paarweise innerhalb des Greiferkopfes höhenverstellbar sind, können sie die Verpackungseinheit beidseitig abstützen und ein Nachgeben des Kartonmaterials der Umverpackung effektiv verhindern.

Wie erwähnt, sind die Zentrierbacken nicht starr am Greiferkopf befestigt, sondern dort höhenverstellbar gelagert, wobei sie gegenüber dem und relativ zum Saugareal in ihrer Höhe verstellbar sind. Damit kann eine Anpassbarkeit an unterschiedliche Gegebenheiten wie etwa unterschiedliche Formabweichungen etc. der jeweils zu erfassenden Verpackungseinheit sichergestellt werden. So ist es auch nicht zwingend notwendig, dass sich die Zentrierbacken vollflächig an die gegenüberliegenden Seitenflächen der Verpackungseinheit anlegen, sondern es kann auch ausreichend sein, wenn sich die angewinkelten unteren Abschnitte der Zentrierbacken auf entsprechend schräg verlaufende obere Abschnitte der Verpackungseinheit abstützt und durch Stabilisierung dieser Bereiche somit die gesamte Verpackungseinheit stabilisiert.

Wahlweise können den Zentrierbacken motorische Antriebe zur gesteuerten Höhenverstellbarkeit zugeordnet sein. Sinnvoll kann jedoch auch eine Variante eines Greiferkopfes sein, bei dem die Zentrierbacken durch ihre Schwerkraft und/oder mittels Federkraft in eine untere Stellung bewegt sind und gegen ihre Schwerkraft und/oder gegen die Rückstellkraft mindestens einer Feder nach oben bewegt werden können.

Außerdem kann vorgesehen sein, dass die Zentrierbacken durch paarweise miteinander gekoppelte höhenverstellbare Zentrierbleche gebildet sind, deren Flachseiten parallel zueinander ausgerichtet sind.

Zur Erreichung des oben genannten Ziels schlägt die vorliegende Erfindung weiterhin eine Hebeanordnung vor, die aus einem Greiferkopf gemäß einer der zuvor beschriebenen Ausführungsvarianten sowie mindestens einer damit erfassbaren und/oder anhebbaren Verpackungseinheit gebildet ist. Bei dieser Hebeanordnung wirkt die Oberseite der Verpackungseinheit bei ihrem unterdruckveranlassten Erfassen mit den dort aufgesetzten und mit Unterdruck beaufschlagten Sauggreifern des Greiferkopfes zusammen. Wie oben schon erwähnt, kann die Verpackungseinheit insbesondere durch eine Kartonumverpackung oder eine aus Karton bestehende Sekundärverpackung zur Aufnahme mehrerer darin eingefügter einzelner Artikel wie bspw. Getränkebehälter, Getränkeflaschen oder Getränkedosen o. dgl. gebildet sein.

Die Oberseite einer mittels des Greiferkopfes aufzunehmenden und/oder zu erfassenden Verpackungseinheit oder Kartonumverpackung weist dabei typischerweise eine kleinere Fläche auf als deren Bodenseite. Um dieser typischen Formgebung einer zu erfassenden Verpackungseinheit oder Kartonumverpackung Rechnung zu tragen, sind bei der erfindungsgemäßen Hebeanordnung vorzugsweise zumindest zwei gegenüberliegende Seitenflächen einer mittels des Greiferkopfes zu erfassenden Verpackungseinheit oder Kartonumverpackung zumindest abschnittsweise zur Oberseite der Verpackungseinheit oder Kartonumverpackung hin angeschrägt und verjüngen sich somit nach oben hin, bspw. aufgrund der typischen Konturen der in der Verpackungseinheit oder Kartonumverpackung befindlichen Flaschen oder Behälter.

Bei der erfindungsgemäßen Hebeanordnung können die Zentrierbacken beim Aufsetzen des Greiferkopfes auf eine zu erfassende und/oder aufzunehmende Verpackungseinheit oder Kartonumverpackung entlang der Seitenflächen der Verpackungseinheit oder Kartonumverpackung entlanggleiten, wobei ein Abstand der Zentrierbacken in etwa einer Breite der dazwischen befindlichen Verpackungseinheit oder Kartonumverpackung entspricht.

Außerdem können die Zentrierbacken beim Aufsetzen des Greiferkopfes auf eine zu erfassende und/oder aufzunehmende Verpackungseinheit oder Kartonumverpackung nach oben ausweichen, sobald die Seitenflächen der zu erfassenden Verpackungseinheit oder Kartonumverpackung an mindestens einer Stelle größer sind als die Abstände der Zentrierbacken voneinander.

Auf diese Weise kann sichergestellt werden, dass die Zentrierbacken im aufgesetzten Zustand des Greiferkopfes die erfasste Verpackungseinheit oder Kartonumverpackung an zwei gegenüberliegenden Seitenflächen kontaktieren und/oder umschließen. Außerdem befinden sich die voneinander wegweisenden unteren Bereiche der Zentrierbacken im aufgesetzten Zustand des Greiferkopfes normalerweise zumindest geringfügig beabstandet zu den Seitenflächen der Verpackungseinheit oder Kartonumverpackung.

Schließlich umfasst die Erfindung eine Getränkeabfüllanlage mit einem Füller zum Abfüllen von Behältnissen, einem Packer zum Verpacken der Behältnisse zu Verpackungseinheiten und mit mindestens einem Greiferkopf gemäß einer der weiter oben beschriebenen Ausführungsvarianten. Eine solche Getränkeabfüll- und Verpackungsanlage besteht aus mehreren fördertechnisch miteinander in Verbindung stehenden Modulen, so unter anderem aus einem Füller zum Befüllen von Behältnissen sowie einen Verpackungsmodul zum Verpacken der Behältnisse zu Verpackungseinheiten, wie sie oben schon beschrieben wurden. Das Verpackungsmodul ist mit mindestens einem Greiferkopf gemäß einer der weiter oben beschriebenen Ausführungsformen ausgestattet. Die Anlage kann bspw. bei der Herstellung, Abfüllung und weiteren Handhabung von Getränkebehältern aus Kunststoff, aus Mineralglas oder aus einem organischen Zellstoffmaterial zum Einsatz kommen.

Die Modulreihenfolge der Getränkeabfüll- und Verpackungsanlage kann bspw. mit einem sog. Nassteil beginnen, in dem ein Getränk in hierfür vorbereitete Behälter abgefüllt wird. Diese Behälter, die durch die oben beschriebenen Getränkebehälter oder Flaschen gebildet sein können, werden vom Nassteil über zusammenhängende Förderabschnitte zu weiteren Handhabungsmodulen wie bspw. einem optionalen Etikettiermodul oder auch einem Direktdruckmodul zum direkten Druckauftrag von Farbe auf die Behältermantelflächen befördert. Ebenso möglich ist es, auf eine solche Etikettierung oder Bedruckung der Behälter zu verzichten, was bei farbig oder gestalterisch vorbereiteten Behältern oder bei anderweitig verpackten Behältern ggf. sinnvoll sei kann.

Zu Beginn der erwähnten Förderstrecke kann sich ein Behälterherstellungsmodul befinden, sofern es sich bei den Getränkebehältern um solche aus Kunststoff oder z.B. aus geeignetem organischen Zellstoffmaterial handelt. Sofern allerdings mit der Getränkeabfüll- und Verpackungsanlage ausschließlich Getränkebehälter aus Mineralglas verwendet, verarbeitet, befüllt und verpackt werden sollen, entfällt ein solches Behälterherstellungsmodul, da solche Behälter eines anderen Herstellungsprozesses bedürfen und normalerweise nicht dafür geeignet sind, in einer vorgeordneten Produktionsstufe einer derartigen Anlage hergestellt zu werden. In einem solchen Fall kann das anfänglich angeordnete Modul bspw. als Anlieferungsmodul für gewaschene, gereinigte und inspizierte Getränkeflaschen ausgestaltet sein.

Stromabwärts folgt der Füller, mit dem die zuvor hergestellten und wahlweise zusätzlich getrockneten und/oder innen beschichteten Kunststoff- oder Zellstoffbehälter mit einer Flüssigkeit, insbesondere mit einem Getränk befüllt werden. Stromabwärts folgen Verpackungs- und Behandlungsmodule für die nunmehr gruppierten Behälter. An dieser Stelle kann sich je nach gewünschter Verpackungsvariante etwa ein Umverpackungsmodul befinden, das der Ausstattung der zuvor gebildeten Behältergruppierungen mit passenden Sekundärverpackungen dienen kann. Diese Sekundärverpackungen können insbesondere durch Kartonumverpackungen gebildet sein, mit denen eine definierte Anzahl von gruppierten Behältern umhüllt werden kann. Wahlweise können die Sekundärverpackungen auch durch Getränkekartons gebildet sein, in die eine definierte Anzahl von gruppierten Behältern eingefügt werden kann.

Im Umverpackungsmodul werden die zuvor erläuterten Verpackungseinheiten hergestellt. Anstelle des Umverpackungsmoduls kann wahlweise auch ein Einschlagmodul zum Umhüllen der Behältergruppierungen mit einer Sekundärverpackung aus Papier vorgesehen sein. Ebenso könnte anstelle eines Umverpackungsmoduls oder eines anderen Umhüllungsmoduls eine Umreifungsstation zur Ausstattung der Behältergruppierungen mit vorgespannten Umreifungsbändern aus Kunststoff oder Papier vorgesehen sein.

Außerdem könnte anstelle des erwähnten Umverpackungsmoduls, eines anderen Umhüllungsmoduls oder einer Umreifungsstation eine Applikationsstation zur Ausstattung der Behältergruppierungen mit Klebeverbindungen vorgesehen sein, wodurch Klebegebinde mit mehreren haftend aneinander gefügten Behältern gebildet werden. Auch solche Klebeverbindungen könnten prinzipiell als Variante von Sekundärverpackungen angesehen werden.

In Förderrichtung können dann weitere Handhabungsmodule folgen, bspw. eine Lagenbildungsstation. In diesem weiteren Handhabungsmodul bzw. in der Lagenbildungsstation kann insbesondere mit Hilfe von geeigneten Manipulatoren oder Handhabungseinrichtungen, d.h. z.B. mit Greifrobotern, eine Positionierung, Verschiebung und/oder Verdrehung der heranbeförderten Verpackungseinheiten oder Gebinde zum Zwecke der Lagenbildung erfolgen. Die Manipulatoren sind jeweils mit Greiferköpfen ausgestattet, wie sie zuvor schon beschrieben wurden.

Die Greiferköpfe, die bspw. an Portalrobotern, an Parallelkinematik-Robotern oder auch an mehrachsig beweglichen Greifarm-Robotern aufgehängt sind, welche die genannten Manipulatoren bilden, erfassen die Verpackungseinheiten einzeln, paarweise oder in größeren Gruppierungen zur vier oder mehr zusammengeschobenen Verpackungseinheiten, um sie entweder in eine bereitstehende Tertiärverpackung zu überführen oder um sie in eine Lagenanordnung zur anschließenden Stapelung und Palettierung zu bringen.

Sofern das weitere Handhabungsmodul durch eine Lagenbildungsstation gebildet sein soll, werden die zusammengeschobenen Lagen mit den Behältergruppierungen oder Verpackungseinheiten nach dem Passieren der Lagenbildungsstation und der dortigen Behandlung durch die Manipulatoren inkl. der Greiferköpfe anschließend zu einer Palettiereinrichtung oder Palettierstation überführt, wo aus den zuvor gebildeten Lagen durch Übereinanderstapeln jeweils größere Paletteneinheiten oder Palettenstapel gebildet werden können.

Zur Erreichung des oben formulierten Ziels schlägt die vorliegende Erfindung schließlich ein Verfahren zum Erfassen von Verpackungseinheiten mittels unterdruckbeaufschlagbaren Sauggreifern vor. Die Sauggreifer sind innerhalb eines Saugareals in einem Greiferkopf angeordnet, wobei es sich bei dem Greiferkopf insbesondere um einen solchen handelt, wie er zuvor in unterschiedlichen Ausführungsvarianten beschrieben wurde. Bei dem erfindungsgemäßen Verfahren werden die Sauggreifer des Greiferkopfes oberseitig auf die zu erfassende Verpackungseinheit aufgesetzt und mit Unterdruck beaufschlagt, so dass die Verpackungseinheit aufgenommen werden kann.

Bei dem Verfahren ist vorgesehen, dass der Greiferkopf mit mindestens zwei Zentrierbacken ausgestattet ist, die an zwei gegenüberliegenden Seiten des Saugareals mit den darin befindlichen Sauggreifern angeordnet und relativ zum Saugareal in paralleler Richtung zu Längsmittelachsen der Sauggreifer beweglich sind.

Das Verfahren kann vorzugsweise mit einem Greiferkopf gemäß einer der zuvor beschriebenen Ausführungsvarianten durchgeführt werden, um jeweils mindestens eine Verpackungseinheit mittels Unterdrucks zu erfassen, wobei eine Oberseite der jeweils aufgenommenen Verpackungseinheit bei ihrem unterdruckveranlassten Erfassen mit den oberseitig dort aufgesetzten und mit Unterdruck beaufschlagten Sauggreifern des Greiferkopfes zusammenwirkt.

Es sei an dieser Stelle ausdrücklich erwähnt, dass alle Aspekte und Ausführungsvarianten, die im Zusammenhang mit dem erfindungsgemäßen Greiferkopf erläutert wurden, gleichermaßen Teilaspekte des erfindungsgemäßen Verfahrens zum Erfassen von Verpackungseinheiten betreffen oder bilden können. Wenn daher an einer Stelle bei der Beschreibung oder auch bei den Anspruchsdefinitionen zum erfindungsgemäßen Greiferkopf von bestimmten Aspekten und/oder Zusammenhängen und/oder Wirkungen die Rede ist, so gilt dies gleichermaßen für das erfindungsgemäße Verfahren. In umgekehrter Weise gilt dasselbe, so dass auch alle Aspekte und Ausführungsvarianten, die im Zusammenhang mit dem erfindungsgemäßen Verfahren zum Erfassen von Verpackungseinheiten erläutert wurden, gleichermaßen Teilaspekte des erfindungsgemäßen Greiferkopfes betreffen oder sein können. Wenn daher an einer Stelle bei der Beschreibung oder auch bei den Anspruchsdefinitionen zum erfindungsgemäßen Verfahren von bestimmten Aspekten und/oder Zusammenhängen und/oder Wirkungen die Rede ist, so gilt dies gleichermaßen für den erfindungsgemäßen Greiferkopf.

Entsprechendes gilt sinngemäß für die erfindungsgemäße Hebeanordnung, die mit einem solchen Greiferkopf ausgestattet ist. So können alle Aspekte und Ausführungsvarianten, die im Zusammenhang mit der erfindungsgemäßen Hebeanordnung erläutert wurden, gleichermaßen Teilaspekte des erfindungsgemäßen Verfahrens betreffen oder bilden können. Wenn daher an einer Stelle bei der Beschreibung oder auch bei den Anspruchsdefinitionen zur erfindungsgemäßen Hebeanordnung von bestimmten Aspekten und/oder Zusammenhängen und/oder Wirkungen die Rede ist, so gilt dies gleichermaßen für das erfindungsgemäße Verfahren. In umgekehrter Weise gilt dasselbe, so dass auch alle Aspekte und Ausführungsvarianten, die im Zusammenhang mit dem erfindungsgemäßen Verfahren erläutert wurden, gleichermaßen Teilaspekte der erfindungsgemäßen Hebeanordnung betreffen oder sein können. Wenn daher an einer Stelle bei der Beschreibung oder auch bei den Anspruchsdefinitionen zum erfindungsgemäßen Verfahren von bestimmten Aspekten und/oder Zusammenhängen und/oder Wirkungen die Rede ist, so gilt dies gleichermaßen für die erfindungsgemäße Hebeanordnung.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.
Fig. 1A zeigt eine schematische und perspektivische Ansicht einer ersten Ausführungsvariante eines Greiferkopfes, der zum Erfassen einer Verpackungseinheit vorgesehen ist.
Fig. 1B zeigt eine schematische Seitenansicht des Greiferkopfes gemäß Fig. 1A, der auf eine Verpackungseinheit aufgesetzt ist.
Fig. 1C zeigt eine schematische und perspektivische Ansicht eines Greiferkopfes gemäß Fig. 1A mit darin erfasster Verpackungseinheit.
Fig. 1D zeigt eine schematische Seitenansicht des Greiferkopfes gemäß Fig. 1C sowie eine damit erfasste Verpackungseinheit.
Fig. 2A zeigt eine schematische und perspektivische Ansicht einer zweiten Ausführungsvariante des Greiferkopfes, der zum Erfassen einer Verpackungseinheit vorgesehen ist.
Fig. 2B zeigt eine schematische Seitenansicht des Greiferkopfes gemäß Fig. 2A, der auf eine Verpackungseinheit aufgesetzt ist.
Fig. 2C zeigt eine schematische und perspektivische Ansicht des Greiferkopfes gemäß Fig. 2A mit darin erfasster Verpackungseinheit.
Fig. 2D zeigt eine schematische Seitenansicht des Greiferkopfes gemäß Fig. 2C sowie eine damit erfasste Verpackungseinheit.
Fig. 3 zeigt eine schematische Draufsicht auf eine Ausführungsvariante einer kompletten Getränkeabfüll- und Verpackungsanlage mit ihren zusammenwirkenden Modulen, wobei die Anlage mit mindestens einem Greiferkopf gemäß Figuren 1A bis 2D ausgestattet ist.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die erfindungsgemäße Hebeanordnung oder der erfindungsgemäße Greiferkopf ausgestaltet sein können und stellen keine abschließende Begrenzung dar. Gleiches gilt sinngemäß für das erfindungsgemäße Verfahren zum Erfassen der Verpackungseinheiten, das ebenfalls durch das nachfolgend erläuterte Ausführungsbeispiel illustriert und beispielhaft beschrieben werden kann.

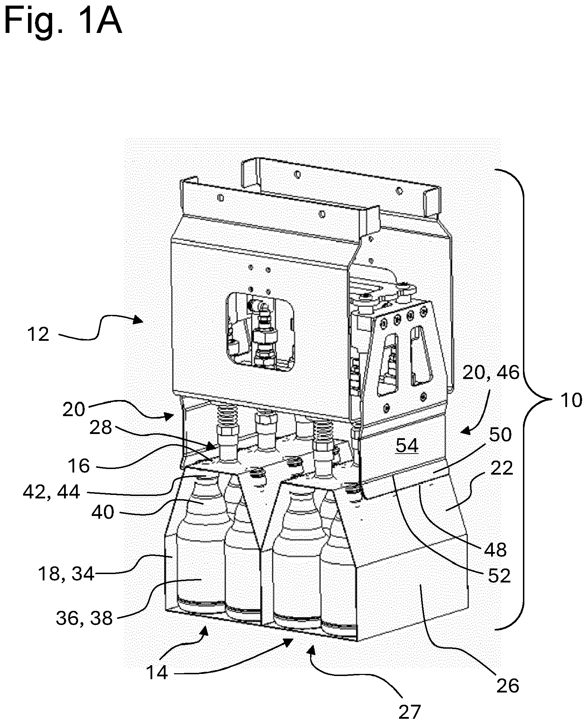

Die schematischen Figuren 1A bis 1D zeigen eine erste Ausführungsvariante eines Greiferkopfes 12, der gemeinsam mit zwei damit erfassten Verpackungseinheiten 14 eine hier so bezeichnete Hebeanordnung 10 bildet. Dabei zeigen die Figuren 1A (perspektivische Ansicht) und 1B (Seitenansicht) einen ersten Zustand des Greiferkopfes 12, der auf Oberseiten 16 einer Kartonumverpackung 18 der zwei nebeneinander befindlichen Verpackungseinheiten 14 aufgesetzt ist. Am Greiferkopf 12 aufgehängte Zentrierbacken 20 befinden sich in diesem ersten Zustand oberhalb der Verpackungseinheiten 14 und kontaktieren diese zunächst noch nicht.

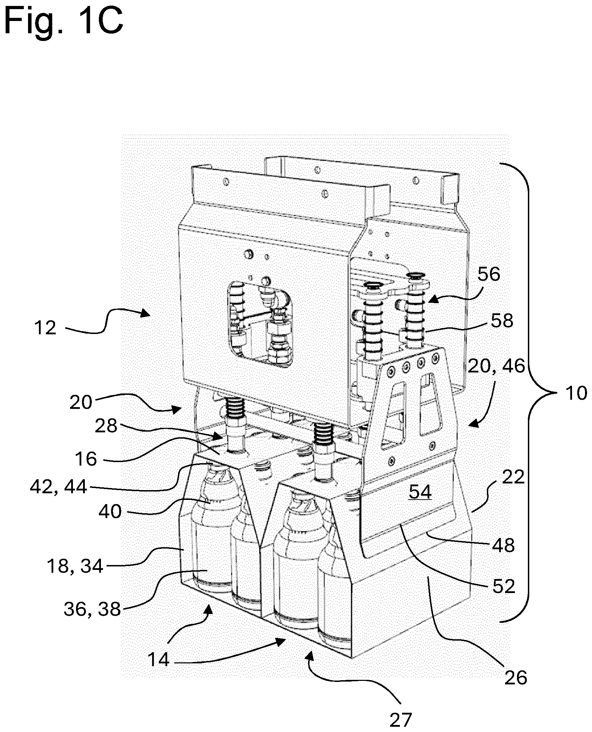

Darüber hinaus zeigen die Figuren 1C (perspektivische Ansicht) und 1D (Seitenansicht) einen zweiten Zustand des Greiferkopfes 12, bei dem die Zentrierbacken 20 abgesenkt und in Kontakt mit Seitenflächen 22 der Verpackungseinheiten 14 gebracht sind.

Die genaue Funktions- und Wirkungsweise des solchermaßen ausgestatteten Greiferkopfes 12 und sein Zusammenwirken mit mindestens einer Verpackungseinheit 14, mit zwei oder mehr Verpackungseinheiten 14, um diese zu erfassen, anheben und umzusetzen, was hier auch als Hebeanordnung 10 bezeichnet wird, soll nachfolgend näher betrachtet werden.

Wie es die Figuren 1A bis 2D anhand der beiden dort gezeigten Ausführungsbeispiele eines Greiferkopfes 12 bzw. einer damit arbeitenden Hebeanordnung 10 zeigen, kann der Greiferkopf 12 insbesondere der Handhabung von solchen Verpackungseinheiten 14 dienen, die keine quaderförmige Gestalt aufweisen, sondern die sich, ausgehend von einer Bodenseite 24, in Richtung zur Oberseite 16 hin verjüngen, so dass die Oberseite 16 einen kleineren Flächeninhalt aufweist als die Bodenseite 24.

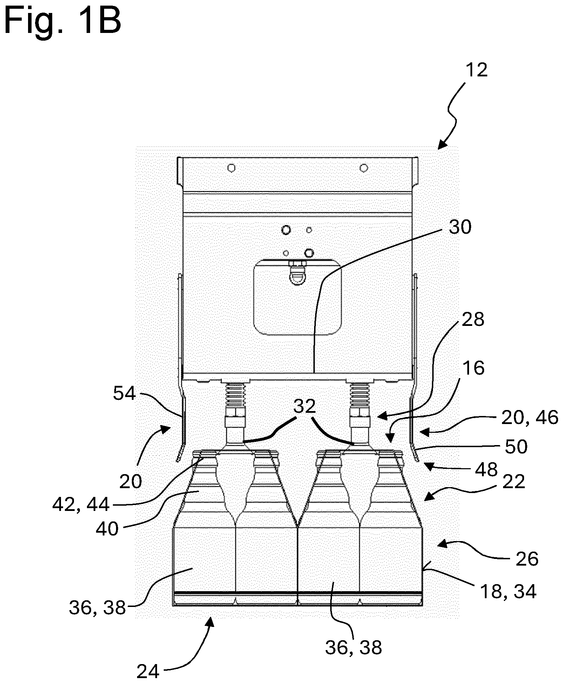

Im ersten Ausführungsbeispiel, das die Figuren 1A bis 1D in verschiedenen Ansichten und Aktivierungszuständen des Greiferkopfes 12 zeigen, werden zwei nebeneinanderstehende und sich flächig an ihren zueinander gewandten Längsseiten 26 berührende Verpackungseinheiten 14 mit einem Greiferkopf 12 angehoben, der mit insgesamt sechs Sauggreifern 28 ausgestattet ist. Diese insgesamt sechs Sauggreifer 28 befinden sich auf gleicher Höhe in einem Saugareal 30 des Greiferkopfes 12 und werden vorzugsweise synchron angesteuert, d.h. bedarfsweise an ihren unterseitigen Saugglocken 32 mit Unterdruck beaufschlagt, wenn sie auf die flächigen Oberseiten 16 der zu erfassenden Verpackungseinheiten 14 aufgesetzt sind (vgl. Figuren 1A und 1B).

Im gezeigten Ausführungsbeispiel sind die beiden zu erfassenden Verpackungseinheiten 14 jeweils durch die Kartonumverpackungen 18 oder eine aus Karton bestehende Sekundärverpackung 34 gebildet, die insgesamt sechs darin eingefügte Getränkebehälter 36 umhüllen, wodurch ein sog. Sixpack gebildet ist. Die Getränkebehälter 36 weisen eine typische Flaschenform mit zylindrischem Mantelbereich 38, einem sich nach oben hin anschließenden verjüngten Halsabschnitt 40 sowie einer oberseitigen Öffnung 42 auf, die mit einem Behälterdeckel 44 verschlossen ist.

Die Kartonumverpackung 18 oder Sekundärverpackung 34 erstreckt sich von der Bodenseite 24 über die beiden Längsseiten 26 der in einer 2x3-Rechteckanordnung aneinandergefügten und gruppierten Getränkebehälter 36 und bedeckt mit ihrer Oberseite 16 die Behälterdeckel 44, während die Schmalseiten 27 der Anordnung der sechs Getränkebehälter 36 frei bleiben und offen sind (vgl. hierzu die Figuren 1A und 1C). Oberhalb der zylindrischen Mantelbereiche 38 folgt die Kartonumverpackung 18 den Konturen der sich im Halsabschnitt 40 jeweils verjüngenden Getränkebehälter 36, so dass die in den Figuren 1A bis 1D gezeigte typische Formgebung einer solchen Verpackungseinheit 14 entsteht.

Bei dieser Verpackungseinheit 14 ist die Kartonumverpackung 18 oder Sekundärverpackung 34 an den oberen Abschnitten ihrer gegenüberliegenden Längsseiten 26 zur Oberseite 16 der Verpackungseinheit 14 hin angeschrägt; diese Längsseiten 26 verjüngen sich somit nach oben hin, und zwar aufgrund der typischen Konturen der in der Verpackungseinheit 14 oder Kartonumverpackung 18 befindlichen Flaschen oder Getränkebehälter 36.

Da insbesondere bei der Verwendung von dünnem Kartonmaterial für diese Art von Kartonumverpackungen 18 kaum zu gewährleisten ist, dass die Verpackungseinheiten 14 beim Erfassen und/oder Anheben mittels der Sauggreifer 28 ihre exakte Formstabilität bewahren, können die am Greiferkopf 12 beweglich aufgehängten Zentrierbacken 20 ihrerseits dafür sorgen, dass solche Verpackungseinheiten 14, die durch das Anheben verformt werden, stabilisiert und seitlich abgestützt werden.

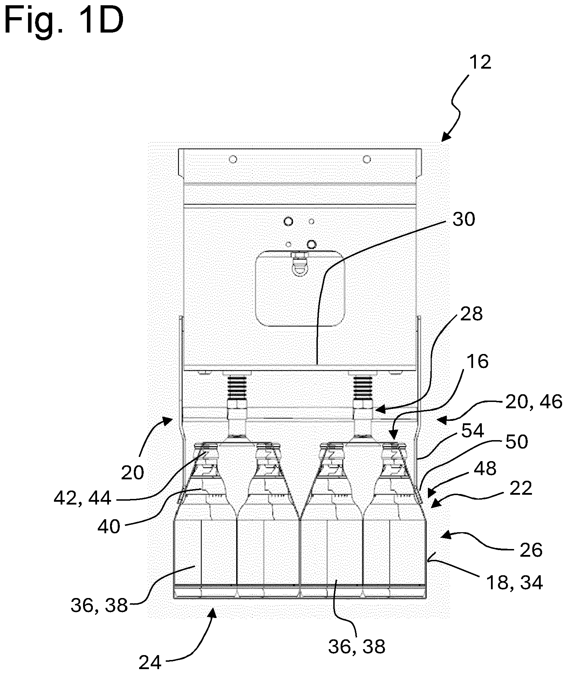

Wie es eine Zusammenschau der Figuren 1A bis 1D erkennen lässt, können die Zentrierbacken 20 beim Aufsetzen des Greiferkopfes 12 auf die beiden zu erfassenden und normalerweise anschließend mittels der Sauggreifer 28 anzuhebenden Verpackungseinheiten 14 entlang der angeschrägten Seitenflächen 22 der jeweiligen Kartonumverpackungen 18 oder Sekundärverpackungen 34 entlanggleiten, wobei die Seitenansichten der Figuren 1B und 1D jeweils erkennen lassen, dass ein Abstand der Zentrierbacken 20 voneinander etwas geringer ist als die addierten Breiten der beiden dazwischen befindlichen Verpackungseinheiten 14 an ihren Schmalseiten 27.

Bei der Aktivierung der Sauggreifer 28 können die Zentrierbacken 20 durch elastische Stellkräfte nach unten gedrückt werden, so dass sie nach dem Aufsetzen des Greiferkopfes 12 auf eine zu erfassende und/oder aufzunehmende Verpackungseinheit 14 gegen diese Stellkräfte nach oben ausweichen können, sobald die Abstände der gegenüberliegenden Seitenflächen 22 der zu erfassenden Verpackungseinheiten 14 größer sind als die Abstände der beiden Zentrierbacken 20 voneinander.

Die am Greiferkopf 12 in vertikaler Richtung beweglich angeordneten Zentrierbacken 20 sind im gezeigten Ausführungsbeispiel durch flache Blechabschnitte 46 gebildet, welche sich seitlich an die vertikalen oder abgeschrägten Seitenflächen 20 der zu erfassenden Verpackungseinheiten 14 anlegen und dort entlanggleiten können. Die gegenüberliegend angeordneten Blechabschnitte 46, welche die Zentrierbacken 20 bilden, sind an ihren unteren Seitenkanten 48 angewinkelt, wodurch sie sich flächig an die angeschrägten Seitenflächen 20 der jeweils kontaktierten Verpackungseinheiten 14 anlegen können.

Ein angewinkelter unterer Bereich 50 der jeweilen Blechabschnitte 48, der sich unmittelbar oberhalb der unteren Seitenkante 48 befindet, kann sinnvollerweise eine Breite von wenigen Zentimetern aufweisen, bevor der Blechabschnitt 48 mit einer Knickkante 52 in einen höheren vertikalen Bereich 54 der jeweiligen Zentrierbacke 20 übergeht. Die Breite des angewinkelten unteren Bereiches 50 des Blechabschnitte 48 kann bspw. zwischen zwei und fünf Zentimetern oder etwas mehr betragen.

Zudem kann ein sinnvoller Winkel zwischen dem angewinkelten unteren Bereiches 50 und dem durch die Knickkante 52 davon abgetrennten vertikalen Bereich 54 oberhalb des unteren Bereiches 50 etwa bei Werten zwischen 10° und 25° liegen, wobei dieser Wert vorzugsweise in etwa dem Schrägungswinkel der entsprechenden Verpackungseinheiten 14 entsprechen kann, die mit dem Greiferkopf 12 erfasst werden sollen.

Um ihrer Aufgabe gerecht zu werden, sind die beiden unteren Bereiche 50 der Zentrierbacken 20 in einer Weise angewinkelt, dass die unteren Seitenkanten 48 der beiden flachen Blechabschnitte 46 weiter voneinander entfernt sind als die oberen vertikalen Bereiche 54, womit definiert ist, dass die Zentrierbacken 20 sich nach unten hin öffnen, um beim Aufsetzen auf die Verpackungseinheiten 14 deren Seitenflächen 22 zuverlässig erfassen und umschließen zu können.

Die beiden gegenüberliegend angeordneten Zentrierbacken 20 können sich wahlweise über die gesamte Längsseite der zu erfassenden Verpackungseinheiten 14 erstrecken und entsprechend dimensioniert sein. Wie es die Figuren 1A und 1C erkennen lassen, erfüllen jedoch auch kürzer dimensionierte Zentrierbacken 20 ihren Zweck, die sich nicht über die gesamte Längsseite erstrecken müssen, sondern bspw. nur 50 bis 80% deren Länge abdecken können.

Wie weiter oben schon erläutert, sind die als Zentrierbacken 20 wirkenden flachen Blechabschnitte 46 mit ihren angewinkelten unteren Seitenkanten 48 nicht starr am Greiferkopf 12 befestigt, sondern dort höhenverstellbar gelagert. Sie sind somit gegenüber dem und relativ zum Saugareal 30 in ihrer Höhe verstellbar, wodurch ihre Anpassbarkeit an unterschiedliche Gegebenheiten wie etwa unterschiedliche Formabweichungen etc. der jeweils zu erfassenden Verpackungseinheit 14 sichergestellt ist.

So zeigen die Figuren 1A und 1B die oberhalb der beiden nebeneinanderstehenden Verpackungseinheiten 14 befindlichen Zentrierbacken 20, die gegen die elastischen Rückstellkräfte von federunterstützten Linearführungen 56 nach oben in Richtung zum Saugareal 30 gezogen sind. Die Linearführungen 56 ermöglichen eine vertikale Relativbewegung der Zentrierbacken 20 gegenüber dem Saugareal 30 im Greiferkopf 12. Dagegen zeigen die Figuren 1C und 1D die auf den schrägen Seitenflächen 22 der Verpackungseinheiten 14 aufliegenden angewinkelten unteren Bereiche 50 der Zentrierbacken 20, was durch expandierte Spiralfedern 58 an den Linearführungen 56 verdeutlicht ist. Diese außen an den Linearführungen 56 befindlichen Spiralfedern 58 ermöglichen zudem eine Ausweichbewegung der Zentrierbacken 20 nach oben, sobald sie auf ein Hindernis treffen oder wenn die unteren Seitenkanten 48 der flachen Blechabschnitte 46 die Seitenflächen 20 der Verpackungseinheiten 14 erreicht haben und dort aufliegen.

Schließlich können den Zentrierbacken 20 hier nicht näher dargestellte motorische Antriebe zur gesteuerten Höhenverstellbarkeit zugeordnet sein. Hiermit können die Zentrierbacken 20 gegen die Rückstellkräfte der Spiralfedern 58 entlang der Linearführungen 56 nach oben in Richtung des Saugareals 30 gezogen werden, um sie in die obere Position gemäß Figuren 1A und 1B zu bringen.

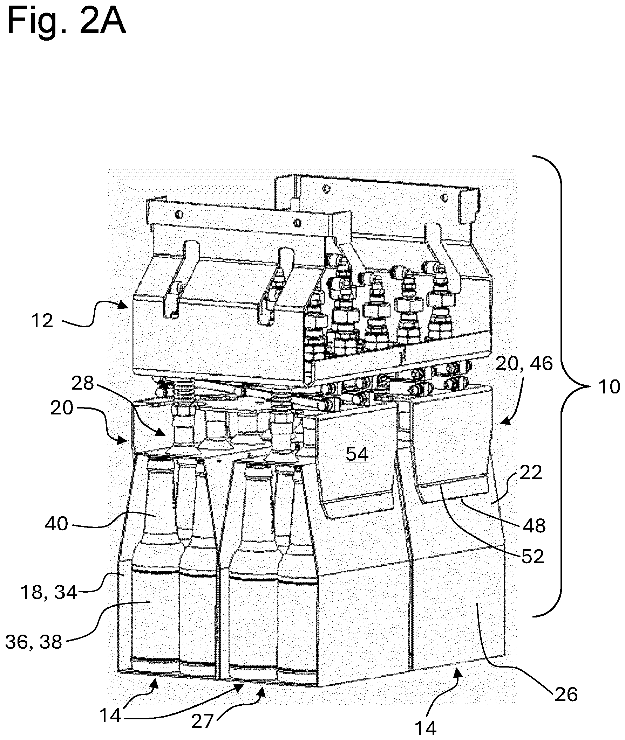

Die schematischen Figuren 2A bis 2D zeigen darüber hinaus eine zweite Ausführungsvariante des Greiferkopfes 12, der gemeinsam mit insgesamt vier damit erfassten Verpackungseinheiten 14 die zuvor schon so bezeichnete Hebeanordnung 10 bildet. Dabei zeigen die Figuren 2A (perspektivische Ansicht) und 2B (Seitenansicht) einen ersten Zustand des Greiferkopfes 12, der auf die Oberseiten 16 der Kartonumverpackungen 18 der jeweils paarweise nebeneinander befindlichen Verpackungseinheiten 14 aufgesetzt ist. Die am Greiferkopf 12 aufgehängten Zentrierbacken 20 befinden sich in diesem ersten Zustand oberhalb der Verpackungseinheiten 14 und kontaktieren diese zunächst noch nicht.

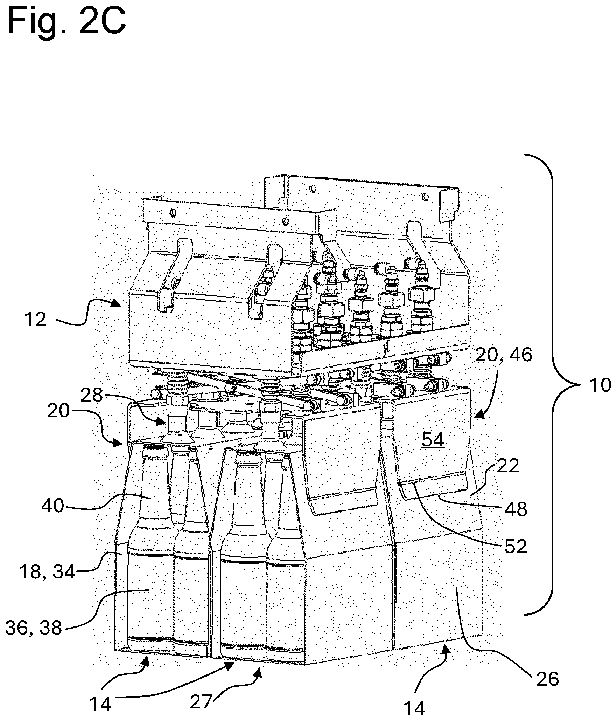

Darüber hinaus zeigen die Figuren 2C (perspektivische Ansicht) und 2D (Seitenansicht) den zweiten Zustand des Greiferkopfes 12, bei dem die Zentrierbacken 20 abgesenkt und in Kontakt mit den äußeren Seitenflächen 22 der in einer 2x2-Rechteckanordnung aneinander gefügten Verpackungseinheiten 14 gebracht sind.

Auch wenn die Behälterformen der Getränkebehälter 36 bei dem in den Figuren 2A bis 2D gezeigten zweiten Ausführungsvariante der Hebeanordnung 10 sowie des Greiferkopfes 12 leicht von der ersten Ausführungsvariante (Figuren 1A bis 1D) abweicht, sind die Verpackungseinheiten 14 auch bei der zweiten Ausführungsvariante durch sog. Sixpacks gebildet, d.h. durch insgesamt sechs in Rechteckanordnung zusammengefasste Getränkebehälter 36, die mittels einer Kartonumverpackung 18 oder Sekundärverpackung 34 aus Kartonmaterial zusammengehalten sind. Wiederum weisen die Verpackungseinheiten 14 keine quaderförmige Gestalt auf, sondern verjüngen sich, ausgehend von ihrer Bodenseite 24, in Richtung zur Oberseite 16 hin, so dass die Oberseite 16 einen kleineren Flächeninhalt aufweist als die Bodenseite 24.

Im zweiten Ausführungsbeispiel, welches die Figuren 2A bis 2D in verschiedenen Ansichten und Aktivierungszuständen des Greiferkopfes 12 illustrieren, werden insgesamt vier, paarweise zu zweit nebeneinanderstehende und somit in einer 2x2-Rechtanordnung befindliche und sich flächig an ihren zueinander gewandten Längsseiten 26 berührende Verpackungseinheiten 14 mit einem Greiferkopf 12 angehoben, der mit insgesamt zwölf Sauggreifern 28 ausgestattet ist. Damit steht für die Erfassung jeweils einer Verpackungseinheit eine Anordnung von drei in Flucht befindlicher Sauggreifer 28 zur Verfügung. Insgesamt umfasst der Greiferkopf vier solcher Dreiergruppen an Sauggreifern 28.

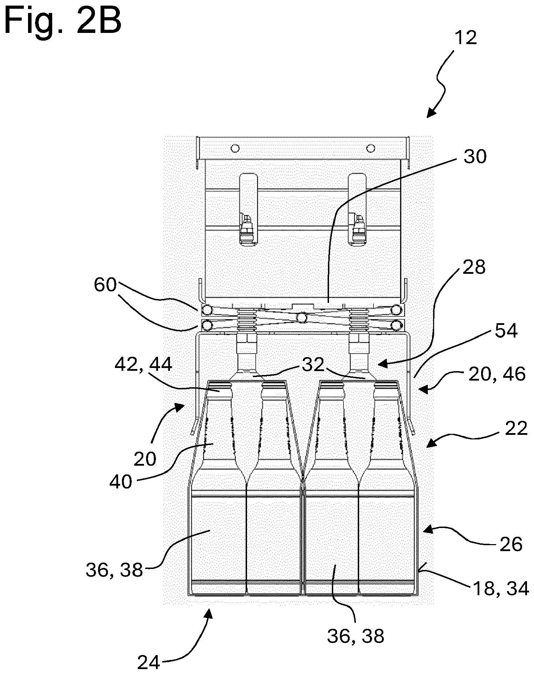

Diese insgesamt zwölf Sauggreifer 28 befinden sich auf gleicher Höhe im entsprechend größer dimensionierten Saugareal 30 des Greiferkopfes 12 und werden synchron angesteuert, d.h. bedarfsweise an ihren unterseitigen Saugglocken 32 mit Unterdruck beaufschlagt, wenn sie auf die flächigen Oberseiten 16 der zu erfassenden Verpackungseinheiten 14 aufgesetzt sind (vgl. Figuren 2A und 2B).

Wie schon im ersten Ausführungsbeispiel sind auch im zweiten Ausführungsbeispiel die insgesamt vier zu erfassenden Verpackungseinheiten 14 jeweils durch Kartonumverpackungen 18 oder eine aus Karton bestehende Sekundärverpackung 34 gebildet, die insgesamt sechs darin eingefügte Getränkebehälter 36 umhüllen, wodurch jeweils ein sog. Sixpack gebildet ist. Die Getränkebehälter 36 weisen eine typische Flaschenform mit zylindrischem Mantelbereich 38, einem sich nach oben hin anschließenden verjüngten Halsabschnitt 40 sowie einer oberseitigen Öffnung 42 auf, die mit einem Behälterdeckel 44 verschlossen ist. Die Kartonumverpackungen 18 des zweiten Ausführungsbeispiels unterscheiden sich nicht wesentlich von denen des ersten Ausführungsbeispiels, so dass insoweit auf die obigen Ausführungen zu verweisen ist.

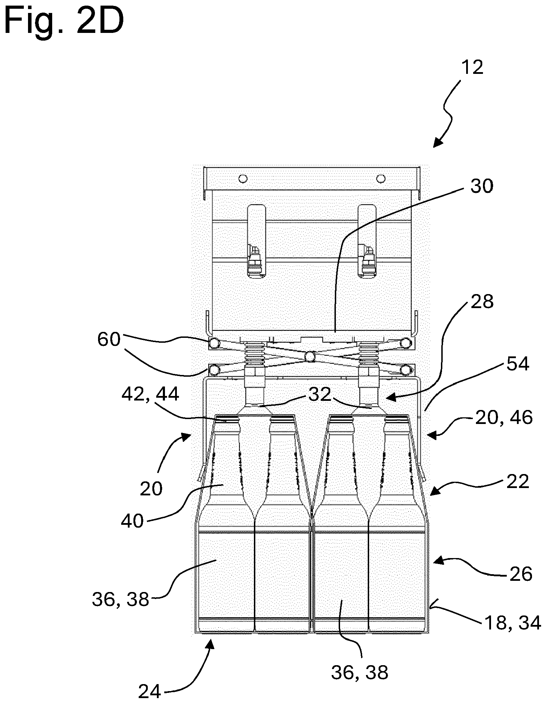

Wie es eine Zusammenschau der Figuren 2A bis 2D erkennen lässt, können die Zentrierbacken 20 beim Aufsetzen des Greiferkopfes 12 auf die insgesamt vier gleichzeitig zu erfassenden und anschließend mittels der Sauggreifer 28 anzuhebenden Verpackungseinheiten 14 entlang der angeschrägten Seitenflächen 22 der jeweiligen Kartonumverpackungen 18 oder Sekundärverpackungen 34 entlanggleiten, wobei die Seitenansichten der Figuren 2B und 2D jeweils erkennen lassen, dass ein Abstand der Zentrierbacken 20 voneinander etwas geringer ist als die addierten Breiten der beiden dazwischen befindlichen Verpackungseinheiten 14 an ihren Schmalseiten 27.

Bei der Aktivierung der Sauggreifer 28 können die Zentrierbacken 20 durch elastische Stellkräfte nach unten gedrückt werden, so dass sie nach dem Aufsetzen des Greiferkopfes 12 auf die zu erfassenden und/oder aufzunehmenden Verpackungseinheiten 14 gegen diese Stellkräfte nach oben ausweichen können, sobald die Abstände der gegenüberliegenden Seitenflächen 22 der zu erfassenden Verpackungseinheiten 14 größer sind als die Abstände der beiden Zentrierbacken 20 voneinander.

Die am Greiferkopf 12 in vertikaler Richtung beweglich angeordneten Zentrierbacken 20 weisen im Wesentlichen dieselben Konturen auf, wie sie zuvor schon anhand des ersten Ausführungsbeispiels erläutert wurden, so dass auf eine nochmalige Beschreibung an dieser Stelle verzichtet werden kann. Allerdings lassen die Figuren 2A und 2C erkennen, dass am Greiferkopf 12 insgesamt vier der Blechabschnitte 48 vorhanden sind, da für jedes Paar von Verpackungseinheiten 14 ein separates Paar von Zentrierbacken 20 vorhanden ist, gebildet durch die besagten Blechabschnitte 48, die in ihren unteren Bereichen 50 jeweils nach außen angewinkelt sind.

Wiederum sind die als Zentrierbacken 20 wirkenden flachen Blechabschnitte 46 mit ihren angewinkelten unteren Seitenkanten 48 bzw. unteren Bereichen 50 nicht starr am Greiferkopf 12 befestigt, sondern dort höhenverstellbar gelagert. Sie sind somit gegenüber dem und relativ zum Saugareal 30 in ihrer Höhe verstellbar, wodurch ihre Anpassbarkeit an unterschiedliche Gegebenheiten wie etwa unterschiedliche Formabweichungen etc. der jeweils zu erfassenden Verpackungseinheit 14 sichergestellt ist.

So zeigen die Figuren 2A und 2B die leicht auf den jeweiligen Seitenflächen 22 der beiden Paare von nebeneinanderstehenden Verpackungseinheiten 14 aufliegenden Zentrierbacken 20, die hier durch Schwerkraft nach unten gezogen sind. Anstelle von Linearführungen ist im zweiten Ausführungsbeispiel ein Scherenmechanismus 60 vorgesehen, mit dem die Zentrierbacken 20 am Greiferkopf 12 aufgehängt sind und der eine vertikale Hubbewegung der Zentrierbacken 20 in Bezug auf das Saugareal 30 ermöglicht. Während die Zentrierbacken 20 zunächst nur leicht auf den Seitenflächen 22 der Verpackungseinheiten 14 aufliegen (Figuren 2A und 2B), zeigen die Figuren 2C und 2D die auf den Oberseiten 16 der Verpackungseinheiten 14 aufliegenden oberen horizontalen Abschnitte der Zentrierbacken 20 und die an den schrägen Seitenflächen 22 der Verpackungseinheiten 14 anliegenden angewinkelten unteren Bereiche 50 der Zentrierbacken 20, was durch den auseinanderbewegten Scherenmechanismus 60 gemäß Fig. 2D verdeutlicht ist.

Da neben dem mit Schwerkraft arbeitenden Scherenmechanismus 60 keine weitere Federunterstützung notwendig oder vorhanden ist, können die Zentrierbacken 20 nach oben ausweichen, sobald sie auf ein Hindernis treffen oder wenn die unteren Seitenkanten 48 der flachen Blechabschnitte 46 die Seitenflächen 20 der Verpackungseinheiten 14 erreicht haben und dort aufliegen.

Schließlich können den Zentrierbacken 20 und deren Scherenmechanismus 60 hier nicht näher dargestellte motorische Antriebe zur gesteuerten Höhenverstellbarkeit zugeordnet sein. Auf diese Weise können die Zentrierbacken 20 gegen die nach unten wirkende Schwerkraft senkrecht nach oben in Richtung des Saugareals 30 gezogen oder wahlweise auch senkrecht nach unten in Richtung zu den Verpackungseinheiten 14 gedrückt werden.

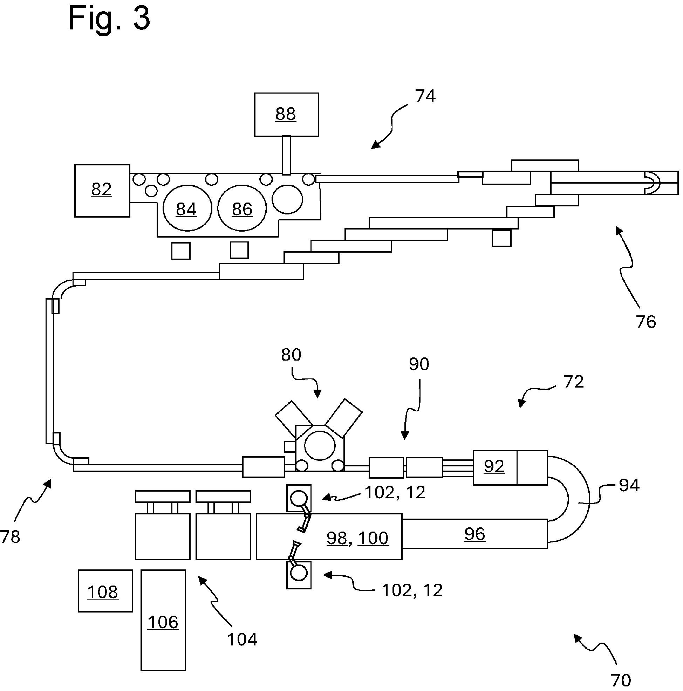

Die nachfolgend erläuterte schematische Draufsicht der Fig. 3 verdeutlicht eine mögliche Ausführungsvariante einer Getränkeabfüll- und Verpackungsanlage 70, bestehend aus mehreren fördertechnisch miteinander in Verbindung stehenden Modulen, so unter anderem einen Füller 86 zum Abfüllen von Behältnissen sowie einen Verpackungsmodul 90 zum Verpacken der Behältnisse zu Verpackungseinheiten 14, wie sie oben schon beschrieben wurden. Das Verpackungsmodul 90 ist mit mindestens einem Greiferkopf 12 gemäß einer der weiter oben beschriebenen Ausführungsformen ausgestattet.

Gezeigt ist in der Fig. 3 eine sinnvolle Modulabfolge, wie sie bei der Herstellung, Abfüllung und weiteren Handhabung von Getränkebehältern 36 aus Kunststoff, aus Mineralglas oder aus einem organischen Zellstoffmaterial zum Einsatz kommen kann. Es ist damit eine praktisch relevante Ausführungsvariante einer kompletten Getränkeabfüll- und Verpackungsanlage 70 mit ihren zusammenwirkenden Modulen gezeigt, wobei ein unterer Abschnitt der Gesamtanlage 70 durch eine Verpackungsmaschine 72 gebildet ist, der weitere Handhabungselemente zur Palettierung von verpackten oder anderweitig fertiggestellten Verpackungseinheiten 14 nachgeordnet sind. Diese im unteren rechten Teil der Getränkeabfüll- und Verpackungsanlage 70 dargestellte Verpackungsmaschine 72 kann bspw. ein sog. Wrap-around-Packer, ein Tray-Packer o. d.gl. sein.

Die Modulreihenfolge der schematisch dargestellten Getränkeabfüll- und Verpackungsanlage 70 beginnt mit einem sog. Nassteil 74 (links oben), in dem ein Getränk in hierfür vorbereitete Behälter abgefüllt wird. Diese Behälter, die durch die oben beschriebenen Getränkebehälter 36 oder Flaschen gebildet sind, werden vom Nassteil 74 über zusammenhängende Förderabschnitte 76 (in Fig. 3 rechts oben) und 78 (in Fig. 3 links mittig) zu einem optionalen Etikettiermodul 80 befördert, das sich mittig im unteren Zeichnungsdrittel befindet. Im Etikettiermodul 80, das als optional angesehen werden kann, können die normalerweise in Reihen hintereinander beförderten Flüssigkeitsbehälter 36 oder Flaschen (vgl. hierzu die Figuren 1A bis 2D) jeweils mit Etiketten ausgestattet werden.

Anstelle eines solchen Etikettiermoduls 80 kann innerhalb der Förderstrecke der Getränkeabfüll- und Verpackungsanlage 70 wahlweise auch ein Direktdruckmodul zum direkten Druckauftrag von Farbe auf die Behältermantelflächen vorgesehen sein. Ebenso möglich ist es, auf eine solche Etikettierung oder Bedruckung der Behälter zu verzichten, was bei farbig oder gestalterisch vorbereiteten Behältern oder bei anderweitig verpackten Behältern ggf. sinnvoll sei kann.

Zu Beginn der gezeigten Förderstrecke kann sich ein Behälterherstellungsmodul 82 befinden, sofern es sich bei den Getränkebehältern 36 um solche aus Kunststoff oder z.B. aus geeignetem organischen Zellstoffmaterial handelt. Für den Fall, dass die im Behälterherstellungsmodul 82 z.B. durch Blasformen oder durch andere geeignete Verfahren hergestellten Getränkebehälter 36 weiterer Behandlungsschritte bedürfen, da sie etwa innen beschichtet werden müssen, kann dies in einem stromabwärts hinter dem Behälterherstellungsmodul 82 angeordneten Beschichtungsmodul 84 erfolgen. Allerdings ist ein solches Beschichtungsmodul 84 als optional zu verstehen, ebenso wie ein optionales Trocknungsmodul, das der Trocknung der Behälter 36 dienen kann.

Sofern allerdings mit der Getränkeabfüll- und Verpackungsanlage 70 ausschließlich Getränkebehälter 36 aus Mineralglas verwendet, verarbeitet, befüllt und verpackt werden sollen, entfällt das Behälterherstellungsmodul 82, da solche Behälter 36 eines anderen Herstellungsprozesses bedürfen und normalerweise nicht dafür geeignet sind, in einer vorgeordneten Produktionsstufe einer derartigen Anlage 70 hergestellt zu werden. In einem solchen Fall kann das Modul 82 bspw. als Anlieferungsmodul für gewaschene, gereinigte und inspizierte Getränkeflaschen ausgestaltet sein.

Stromabwärts hinter dem Beschichtungs- und/oder Trocknungsmodul 84 befindet sich normalerweise ein Füller 86, mit dem die zuvor hergestellten und wahlweise zusätzlich getrockneten und/oder innen beschichteten Kunststoff- oder Zellstoffbehälter mit einer Flüssigkeit, insbesondere mit einem Getränk befüllt werden.

In unmittelbarer Nähe zu diesem Füller 86 kann die dargestellte Getränkeabfüll- und Verpackungsanlage 70 wahlweise mit einem weiteren Modul 88 zur Herstellung von geeigneten Verschlüssen ausgestattet sein. Diese Verschlüsse, die weiter oben als Behälterdeckel 44 bezeichnet wurden, können wahlweise aus Metall, aus Kunststoff oder auch aus einem geeigneten Zellstoffmaterial hergestellt werden, bspw. aus demselben Material, das auch für die Behälter 36 oder Flaschen verwendet wird, sofern es sich nicht um Glasflaschen handelt. Somit kann es sich bei dem Modul 88 um ein Verschlussherstellungsmodul 88 handeln, das mit einem geeigneten Handhabungsmodul verbunden sein kann, das für das Verschließen der Behälter 36 unter Verwendung der im Modul 88 hergestellten Behälterdeckel 44 sorgt.

In Transportrichtung stromabwärts hinter dem zweiten Förderabschnitt 78 und hinter dem (optionalen) Etikettiermodul 80 befinden sich Verpackungs- und Behandlungsmodule für die nunmehr gruppierten Behälter 36. An dieser Stelle kann sich je nach gewünschter Verpackungsvariante etwa ein Umverpackungsmodul 90 befinden, das der Ausstattung der zuvor gebildeten Behältergruppierungen mit passenden Sekundärverpackungen (hier nicht gezeigt) dienen kann. Diese Sekundärverpackungen können insbesondere durch Kartonumverpackungen gebildet sein, mit denen eine definierte Anzahl von gruppierten Behältern 36 umhüllt werden kann. Wahlweise können die Sekundärverpackungen auch durch Getränkekartons gebildet sein, in die eine definierte Anzahl von gruppierten Behältern 36 eingefügt werden kann.

Im Umverpackungsmodul 90 werden die zuvor erläuterten Verpackungseinheiten 14 hergestellt.

Anstelle des hier lediglich beispielhaft genannten Umverpackungsmoduls 90 kann wahlweise auch ein Einschlagmodul zum Umhüllen der Behältergruppierungen mit einer Sekundärverpackung aus Papier vorgesehen sein. Ebenso könnte anstelle eines Umverpackungsmoduls 90 oder eines anderen Umhüllungsmoduls eine Umreifungsstation zur Ausstattung der Behältergruppierungen mit vorgespannten Umreifungsbändern aus Kunststoff oder Papier vorgesehen sein.

Wahlweise könnte anstelle des erwähnten Umverpackungsmoduls 90, eines anderen Umhüllungsmoduls oder einer Umreifungsstation eine Applikationsstation zur Ausstattung der Behältergruppierungen mit Verpackungszuschnitten vorgesehen sein, wobei solche Verpackungszuschnitte als Sekundärverpackungen angesehen werden können.

Außerdem könnte anstelle des erwähnten Umverpackungsmoduls 90, eines anderen Umhüllungsmoduls oder einer Umreifungsstation eine Applikationsstation zur Ausstattung der Behältergruppierungen mit Klebeverbindungen vorgesehen sein, wodurch Klebegebinde mit mehreren haftend aneinander gefügten Behältern gebildet werden. Auch solche Klebeverbindungen könnten prinzipiell als Variante von Sekundärverpackungen angesehen werden.

Dem Umverpackungsmodul 90 oder dem alternativ vorgesehenen Verpackungs- oder Behandlungsmodul kann stromabwärts bspw. ein weiteres Behandlungsmodul 92 folgen, das der Nachbehandlung der zuvor hergestellten Verpackungseinheiten 14 dienen kann, bspw. um eine zusätzliche Ausstattung anzubringen. Eine solche Ausstattung kann eine Bedruckung oder auch eine zusätzliche Etikettierung o. dgl. sein. Nach passieren dieses optional zu verstehenden Behandlungsmoduls 92 werden die Verpackungseinheiten 14 über die sich an das Modul 92 anschließende Fördereinrichtung 94 weiterbefördert.

Im gezeigten Ausführungsbeispiel beschreibt die als Horizontalfördereinrichtung ausgebildete Fördereinrichtung 94, die hier auch als dritter Förderabschnitt betrachtet werden kann, eine 180°-Umlenkung und setzt sich in einem geradlinigen Förderabschnitt 96 fort.

Nach der Umlenkung dieser Fördereinrichtung 94 um 180° und dem geradlinigen Förderabschnitt 96 folgt ein weiteres Handhabungsmodul 98, das bspw. durch eine Lagenbildungsstation 100 gebildet sein kann. In diesem weiteren Handhabungsmodul 98 bzw. in der Lagenbildungsstation 100 kann insbesondere mit Hilfe von geeigneten Manipulatoren 102 oder Handhabungseinrichtungen, d.h. z.B. mit Greifrobotern, eine Positionierung, Verschiebung und/oder Verdrehung der heranbeförderten Verpackungseinheiten 14 oder Gebinde zum Zwecke der Lagenbildung erfolgen. Die in der schematischen Darstellung der Fig. 3 lediglich angedeuteten Manipulatoren 102 sind jeweils mit Greiferköpfen 12 ausgestattet, wie sie zuvor anhand der Figuren 1A bis 2B beispielhaft beschrieben wurden.

Die Greiferköpfe 12, die bspw. an Portalrobotern, an Parallelkinematik-Robotern oder auch an mehrachsig beweglichen Greifarm-Robotern aufgehängt sind, welche die Manipulatoren 102 bilden, erfassen die Verpackungseinheiten 14 einzeln, paarweise (vgl. Figuren 1A bis 1D) oder in größeren Gruppierungen zur vier (vgl. Figuren 2A bis 2D) oder mehr zusammengeschobenen Verpackungseinheiten 14, um sie entweder in eine bereitstehende Tertiärverpackung zu überführen oder um sie in eine Lagenanordnung zur anschließenden Stapelung und Palettierung zu bringen.

Sofern das weitere Handhabungsmodul 98 durch eine Lagenbildungsstation 100 gebildet sein soll, werden die zusammengeschobenen Lagen mit den Behältergruppierungen oder Verpackungseinheiten 14 nach dem Passieren der Lagenbildungsstation 100 und der dortigen Behandlung durch die Manipulatoren 102 inkl. der Greiferköpfe 12 anschließend zu einer Palettiereinrichtung oder Palettierstation 104 überführt, wo aus den zuvor gebildeten Lagen durch Übereinanderstapeln jeweils größere Paletteneinheiten oder Palettenstapel gebildet werden können, was jedoch hier nicht näher gezeigt ist.

Im Unterschied zur Darstellung in der Fig. 3 kann die Palettiereinrichtung oder Palettierstation 104 ggf. als Teil der Verpackungsanlage oder -maschine 72 betrachtet werden, wahlweise jedoch auch als separates, sich an die Verpackungsanlage oder Verpackungsmaschine 72 anschließendes Modul. Je nach gewählter Systematik kann die Lagenbildungsstation 100 mitsamt den ihr zugeordneten Manipulatoren 102 oder Handhabungseinrichtungen als Bestandteil der Palettiereinrichtung oder Palettierstaion 104 betrachtet werden, da die Zusammenstellung der Behältergruppierungen oder Verpackungseinheiten 14 zu stapelbaren Gebindelagen in unmittelbarem Zusammenhang mit der Stapelung, d.h. mit der Palettierung dieser Gebindelagen steht.

Der Palettiereinrichtung 104 kann weiterhin ein Palettentransportmodul 106 zugeordnet sein, mit dem Paletten heranbefördert werden, um darauf die Palettenlagen für die zu bildenden Palettenstapel ablegen zu können. Als weiteres optional zu verstehendes Modul, das mit der Palettiereinrichtung oder mit der Palettierstation 104 gekoppelt sein kann, ist ein Zwischenlageneinleger 108 zur Handhabung und zum Positionieren der Zwischenlagen zwischen aufeinanderfolgend abgelegten Palettenlagen zu nennen, der in Fig. 3 als schematisches Element verdeutlicht ist.

Die zusammenwirkenden Module der Getränkeabfüll- und Verpackungsanlage 70 sind normalerweise jeweils mit eigenen Steuermodulen ausgestattet, was hier jedoch nicht zeichnerisch dargestellt ist. Zudem kann eine zentrale Steuerungseinheit vorgesehen sein, die jedoch ebenfalls nicht dargestellt ist. Diese Steuermodule sowie die zentrale Steuereinheit können jeweils verschiedene Sensorsignale als Eingangsgrößen verarbeiten, um daraus Steuersignale für verschiedene Anlagenmodule zu generieren.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste

- 10: Hebeanordnung
- 12: Greiferkopf
- 14: Verpackungseinheit, Gebinde
- 16: Oberseite
- 18: Kartonumverpackung
- 20: Zentrierbacke
- 22: Seitenfläche
- 24: Bodenseite
- 26: Längsseite
- 27: Schmalseite
- 28: Sauggreifer
- 30: Saugareal
- 32: Saugglocke
- 34: Sekundärverpackung
- 36: Getränkebehälter
- 38: Mantelbereich
- 40: Halsabschnitt
- 42: Öffnung
- 44: Behälterdeckel
- 46: flacher Blechabschnitt
- 48: untere Seitenkante
- 50: unterer Bereich, unterer angewinkelter Bereich
- 52: Knickkante
- 54: oberer Bereich, oberer vertikaler Bereich
- 56: Linearführung
- 58: Spiralfeder
- 60: Scherenmechanismus

- 70: Getränkeabfüllanlage, Getränkeverpackungsanlage, Getränkeabfüll- und Verpackungsanlage
- 72: Verpackungsmaschine
- 74: Nassteil
- 76: Förderabschnitt, erster Förderabschnitt
- 78: Förderabschnitt, zweiter Förderabschnitt
- 80: Etikettiermodul
- 82: Behälterherstellungsmodul
- 84: Beschichtungsmodul, Trocknungsmodul, Beschichtungs- und/oder Trocknungsmodul
- 86: Füller
- 88: weiteres Modul, Verschlussherstellungsmodul
- 90: Umverpackungsmodul
- 92: weiteres Behandlungsmodul
- 94: Förderabschnitt, dritter Förderabschnitt
- 96: Förderabschnitt, geradliniger Förderabschnitt, vierter Förderabschnitt
- 98: weiteres Handhabungsmodul
- 100: Lagenbildungsstation
- 102: Manipulator, Handhabungseinrichtung
- 104: Palettierstation
- 106: Palettentransportmodul
- 108: Zwischenlageneinleger

## Patentansprüche

1. Greiferkopf (12) mit mehreren innerhalb eines Saugareals (30) angeordneten und mit Unterdruck beaufschlagbaren Sauggreifern (28), welcher Greiferkopf (12) dem Erfassen von Verpackungseinheiten (14) durch Anlegen eines Unterdrucks an den Sauggreifern (28) dient, indem diese in oberseitig auf die Verpackungseinheit (14) aufgesetzter Position mit einer Oberseite (16) der Verpackungseinheit (14) zusammenwirken und die Verpackungseinheit (14) aufnehmen,
**dadurch gekennzeichnet, dass** der Greiferkopf (12) mit mindestens zwei Zentrierbacken (20) ausgestattet ist, die an zwei gegenüberliegenden Seiten des Saugareals (30) mit den darin befindlichen Sauggreifern (28) angeordnet und relativ zum Saugareal (30) in paralleler Richtung zu Längsmittelachsen der Sauggreifer (28) beweglich sind.

2. Greiferkopf (12) nach Anspruch 1, bei dem die gegenüberliegend angeordneten Zentrierbacken (20) an ihrer vom Saugareal (30) und von ihrer jeweiligen Aufhängung entfernten unteren Seite (50) in einer vom Greiferkopf (12) wegweisenden Richtung angewinkelt sind.

3. Greiferkopf (12) nach Anspruch 1 oder 2, bei dem die gegenüberliegend angeordneten Zentrierbacken (20) mit ihren unteren Seiten (50) voneinander wegweisen, wodurch sich ein Zwischenraum zwischen den Zentrierbacken (20) in Richtung zu deren unterer Seite (50) vergrößert.

4. Greiferkopf (12) nach einem der Ansprüche 1 bis 3, bei dem die Oberflächen der Zentrierbacken (20) in ihren oberen Bereichen (54) parallel zueinander ausgerichtet sind und ein konstanter Abstand zwischen ihnen ausgebildet ist.

5. Greiferkopf (12) nach einem der Ansprüche 1 bis 4, bei dem die Zentrierbacken (20) miteinander gekoppelt und paarweise innerhalb des Greiferkopfes (12) höhenverstellbar sind.

6. Greiferkopf (12) nach Anspruch 5, bei dem die Zentrierbacken (20) im Greiferkopf (12) höhenverstellbar gelagert sind, wobei sie gegenüber dem und relativ zum Saugareal (30) in ihrer Höhe verstellbar sind.

7. Greiferkopf (12) nach einem der Ansprüche 1 bis 6, bei dem den Zentrierbacken (20) motorische Antriebe zur gesteuerten Höhenverstellbarkeit zugeordnet sind.

8. Greiferkopf (12) nach einem der Ansprüche 1 bis 6, bei dem die Zentrierbacken (20) durch ihre Schwerkraft und/oder mittels Federkraft in eine untere Stellung bewegt sind und gegen ihre Schwerkraft und/oder gegen die Rückstellkraft mindestens einer Feder (58) nach oben beweglich sind.

9. Greiferkopf (12) nach einem der Ansprüche 1 bis 8, bei dem die Zentrierbacken (20) durch paarweise miteinander gekoppelte höhenverstellbare Zentrierbleche gebildet sind, deren Flachseiten (46, 54) parallel zueinander ausgerichtet sind.

10. Hebeanordnung (10), bestehend aus einem Greiferkopf (12) gemäß einem der Ansprüche 1 bis 9 und jeweils mindestens einer mittels Unterdruckes erfassbaren Verpackungseinheit (14), deren Oberseite (16) bei einem unterdruckveranlassten Erfassen der Verpackungseinheit (14) mit den dort aufgesetzten und mit Unterdruck beaufschlagten Sauggreifern (28) des Greiferkopfes (12) zusammenwirkt.

11. Hebeanordnung (10) nach Anspruch 10, bei welcher die Oberseite (16) einer mittels des Greiferkopfes (12) zu erfassenden Verpackungseinheit (14) eine kleinere Fläche aufweist als deren Bodenseite (24).

12. Hebeanordnung (10) nach Anspruch 10 oder 11, bei welcher zumindest zwei gegenüberliegende Seitenflächen (22) einer mittels des Greiferkopfes (12) zu erfassenden Verpackungseinheit (14) zumindest abschnittsweise zur Oberseite (16) der Verpackungseinheit (14) hin angeschrägt sind und sich nach oben hin verjüngen.

13. Hebeanordnung (10) nach einem der Ansprüche 10 bis 12, bei welcher die Zentrierbacken (20) beim Aufsetzen des Greiferkopfes (12) auf eine zu erfassende Verpackungseinheit (14) entlang der Seitenflächen (22) der Verpackungseinheit (14) entlanggleiten, wobei ein Abstand der Zentrierbacken (20) in etwa einer Breite der dazwischen befindlichen Verpackungseinheit (14) entspricht.

14. Hebeanordnung (10) nach Anspruch 13, bei welcher die Zentrierbacken (20) beim Aufsetzen des Greiferkopfes (12) auf eine zu erfassende Verpackungseinheit (14) nach oben ausweichen können, sobald ein Abstand der Seitenflächen (22) der zu erfassenden Verpackungseinheit (14) an mindestens einer Stelle größer ist als die Abstände der Zentrierbacken (20) voneinander.

15. Hebeanordnung (10) nach einem der Ansprüche 10 bis 14, bei welcher die Zentrierbacken (20) im aufgesetzten Zustand des Greiferkopfes (12) die erfasste Verpackungseinheit (14) an zwei gegenüberliegenden Seitenflächen (22) kontaktieren und/oder umschließen.

16. Hebeanordnung (10) nach Anspruch 15, bei welcher sich die voneinander wegweisenden unteren Bereiche (50) der Zentrierbacken (20) im aufgesetzten Zustand des Greiferkopfes (12) zumindest geringfügig beabstandet zu den Seitenflächen (22) der Verpackungseinheit (14) befinden.

17. Getränkeabfüll- und Verpackungsanlage (70) mit einem Füller zum Abfüllen von Behältnissen (36), einem Verpackungsmodul (90) zum Verpacken der Behältnisse (36) zu Verpackungseinheiten (14) und mit mindestens einem Greiferkopf (12) gemäß einem der Ansprüche 1 bis 9.

18. Verfahren zum Erfassen von Verpackungseinheiten (14) mittels unterdruckbeaufschlagbaren Sauggreifern (28), die innerhalb eines Saugareals (30) in einem Greiferkopf (12) angeordnet sind, wobei die Sauggreifer (28) oberseitig auf die Verpackungseinheit (14) aufgesetzt und mit Unterdruck beaufschlagt werden und die Verpackungseinheit (14) aufnehmen,
wobei der Greiferkopf (12) mit mindestens zwei Zentrierbacken (20) ausgestattet ist, die an zwei gegenüberliegenden Seiten des Saugareals (30) mit den darin befindlichen Sauggreifern (28) angeordnet und relativ zum Saugareal (30) in paralleler Richtung zu Längsmittelachsen der Sauggreifer (28) beweglich sind.

19. Verfahren nach Anspruch 18, das mit einem Greiferkopf (12) gemäß einem der Ansprüche 1 bis 9 durchgeführt wird, um jeweils mindestens eine Verpackungseinheit (14) mittels Unterdrucks zu erfassen, wobei eine Oberseite (16) der jeweils aufgenommenen Verpackungseinheit (14) bei ihrem unterdruckveranlassten Erfassen mit den oberseitig dort aufgesetzten und mit Unterdruck beaufschlagten Sauggreifern (28) des Greiferkopfes (12) zusammenwirkt.
